# EUROPÄISCHE PATENTSCHRIFT

(11) **EP 0 666 018 B1**
(45) Veröffentlichungstag und Bekanntmachung des Hinweises auf die Patenterteilung: **11.08.1999**
(21) Anmeldenummer: 95100930.7
(22) Anmeldetag: 25.01.1995
(51) Int. Cl.: A01D 43/06, B65G 69/02

(54) **Vorrichtung zur automatischen Befüllung von Ladebehältern**
Device for the automatic loading of containers
Dispositif pour le remplissage automatique de conteneurs

(30) Priorität: 08.02.1994 DE 4403893
(43) Veröffentlichungstag der Anmeldung: 09.08.1995
(73) Patentinhaber: CLAAS Kommanditgesellschaft auf Aktien, 33428 Harsewinkel (DE)
(72) Erfinder: Pollklas, Manfred, D-33378 Rheda-Wiedenbrück (DE)

(56) Entgegenhaltungen:
- EP-A- 0 131 693
- DE-A- 2 737 782
- GB-A- 2 073 914
- NL-A- 8 700 238
- US-A- 3 889 796
- US-A- 4 360 308
- PATENT ABSTRACTS OF JAPAN vol. 10 no. 222 (M-504) [2278] ,2.August 1986 & JP-A-61 060529 (ISEKI & CO) 28.März 1986,

## Beschreibung

Die Erfindung bezieht sich auf eine Vorrichtung zur automatischen Befüllung von einem fahrbaren Ladebehälter nach dem Oberbegriff des Anspruchs 1.

Bei dem Ernteeinsatz eines Feldhäckslers oder Mähdreschers fährt parallel neben diesem ein von einem Schlepper gezogener Ladewagen, der kontinuierlich mit dem frisch gehäckselten oder gedroschenen Gutstrom beladen wird, indem das Häckselgut vom Feldhäcksler durch einen Auswurfbeschleuniger über einen Auswurfkrümmer auf den Ladewagen gefördert wird. Dabei muß von dem Feldhäcksler- und dem Schlepperfahrer ständig der Gutstromstrahl beobachtet werden, damit der Gutstrom nicht neben den Ladebehälter des Ladewagens auf den Boden fällt und damit verlorengeht. Dies erfordert unter anderem eine ständige Anpassung der Fahrgeschwindigkeiten von Feldhäcksler und Schlepper sowie deren Abstand zueinander. Außerdem soll der Ladewagen möglichst vollständig und gleichmäßig beladen werden. Eine möglichst vollständige Ausnutzung des Ladevolumens bedeutet, daß die Zahl der Ladewagenwechsel und damit die Zahl der Fahrtunterbrechungen für den Feldhäcksler während des Ernteeinsatzes verringert werden kann.

Stillstandzeiten jedoch bedeuten bei in der Erntesaison derartig stark ausgelasteten Erntemaschinen wirtschaftliche Einbußen. Durch die Notwendigkeit, den Gutstromstrahl vom Feldhäcksler auf den Ladewagen zu beobachten, wird die Aufmerksamkeit des Feldhäcksler- und Schlepperfahrers stark beansprucht. Für den Feldhäcksler-Fahrer besteht die Möglichkeit, den Auswurfkrümmer nach Beobachtung des Gutstromstrahles manuell so zu verschwenken, daß der Gutstrom für eine gleichmäßige Verteilung des Erntegutes auf dem Ladewagen an einer anderen Stelle auftritt. Dies bedeutet jedoch eine zusätzliche Belastung für den Feldhäcksler-Fahrer. Besonders in Kurvenfahrten, bei und nach einem Fahrtrichtungswechsel, z. B. am Ende einer Maisreihe, fällt häufig Erntegut neben den Ladewagen auf den Boden.

Mähdrescher verfügen über einen Korntank, der entweder während des Dreschens über ein hydraulisch schwenkbares Kornauslaufrohr auf einen Ladewagen abgetankt wird, oder im Stillstand abgetankt wird. Hier tauchen die oben genannten Abfüllprobleme ebenfalls auf. Auch die Abtankung beim stillstehenden Mähdrescher erfordert die Anwesenheit einer Bedienperson während des Abtankens. Diese muß das Auslaufrohr so verschwenken, oder den Ladewagen so gegenüber dem Auslaufrohr verfahren, daß der Ladewagen möglichst vollständig und gleichmäßig mit dem Körnerstrom befüllt wird. Oftmals wird das Korn auch auf dem Ladewagen von Hand mit einer Schaufel gleichmäßig verteilt. Diese Arbeiten begrenzen eine weitere Verkürzung der Stillstandzeiten, obwohl moderne Mähdrescher an sich eine hohe Entladeleistung aufweisen.

Eine Vorrichtung zur automatischen Befüllung von einem fahrbaren Ladebehälter findet sich beispielsweise in der JP 61-60529. Dort wird vorgeschlagen, bei einem Mähdrescher endseitig am Korntankauslaufrohr einen Sensor einzusetzen, der die Höhe eines Schüttkegels von ausgefördertem Erntegut relativ zur Höhe einer seitlich Wand eines Ladebehälters ermittelt und im Falle des Erreichens eines kritischen Wertes ein Alarm-, Stop-, Schwenk- oder anders geartetes Signal auslöst. Diese Vorrichtung kann verhindern, daß Erntegut über die Seitenwand des Ladebehälters hinwegläuft und zu Boden fällt, sie erfordert aber immer noch die Aufmerksamkeit der Fahrer der Erntemaschine und des Ladebehälters, da die Vorrichtung nicht vollautomatisch arbeitet.

Eine weitere Vorrichtung ist in der DE 27 37 782 gezeigt. Dort wird für eine Kartoffelerntemaschine vorgeschlagen, zur Regelung der Abwurfhöhe eines Verladeförderers am Abwurfende des Förderers einen Ultraschallmeßkopf beweglich anzubringen. Das Signal des Ultraschallmeßkopfes soll dazu verwendet werden, das Heben und Senken des Förderers zu steuern. Auch diese Vorrichtung erlaubt keinen vollautomatischen Betrieb der Übergabevorrichtung, da nur eine vertikale Bewegung steuerbar ist.

Aus der EP 0 131 693 B1 ist eine Erntemaschine mit einem steuerbaren beweglichen, das Erntegut auf einen angehängten Wagen ausstoßenden Stutzen bekannt. Dort sind zwei Fühlermittel vorgesehen, welche zum Abtasten der relativen Schwenkstellung des Stutzens und der relativen Ausrichtung von Erntemaschine und Wagen dienen. Die Fühlermittel sind von Potentiometern gebildet. Der Stutzen wird in einem vorbestimmten Schwenkwinkelbereich nacheinander in mehrere Stellungen periodisch verschwenkt, um eine gleichmäßige Befüllung des Wagens zu erzielen. In Kurvenfahrten wird dann der Schwenkwinkelbereich des Stutzens entsprechend der Signale der Fühlermittel automatisch stark begrenzt.

Aus der EP 0 070 340 B1 ist eine Vorrichtung zum Steuern einer Auslaufschurre für Ernte-Zerkleinerungs-Lademaschinen zur Beladung eines von einer Zugmaschine benachbart gezogenen Anhängers, des Ladebehälters, bekannt. Dort wird die relative Schwenkstellung der Auslaufschurre zur Anhängerlängsrichtung ermittelt, indem an der Auslaufschurre ein Radiowellensender und ein Empfänger und auf dem Anhänger ein hohlspiegelartiger Reflektor angeordnet ist. Dabei werden vom Radiowellensender ausgehende Wellen vom Reflektor zum Empfänger reflektiert.

Bei diesen vorbekannten Vorrichtungen ist die Schwenksteuerung auf jeweils nur eine spezielle Kombination von einer Erntemaschine und spezifisch ausgerüsteten Ladebehältern ausgelegt.

Der Erfindung liegt die Aufgabe zugrunde, eine Vorrichtung zur Befüllung von Ladebehältern mit einem Gutstrom, insbesondere für Erntemaschinen, zu schaffen, die eine automatische, verlustfreie und möglichst vollständige Befüllung eines Ladebehälters ermöglicht, die sicher und zuverlässig aufgebaut ist und für verschiedene unspezifische Ladebehälter beliebig einsetzbar ist.

Diese Aufgabe wird erfindungsgemäß dadurch gelöst, daß der Entfernungsmesser aus einem optischen und/oder akustischen Entfernungsmesser besteht, der Entfernungssignale erzeugt, die von diesem Entfernungsmesser erzeugten Entfernungssignale einer elektronischen Auswerte- und Steuereinrichtung zugeführt sind, welche aus den Entfernungssignalen mittels eines Steuerprogramms die jeweilige Füllstandshöhe und die Lage der Kanten der Seitenwände des Ladebehälters erfaßt und die Entfernungssignale laufend zu elektrischen Stellsignalen auswertet, die an Steuerventile zu deren Betätigung übermittelt sind, und wobei das Steuerprogramm die Stellsignale unter Auswertung der zugeführten Entfernungssignale so bestimt, daß die Auswurfrichtung des Gutstromes innerhalb der Lage der Kanten des Ladebehälters liegt.

Vorteilhafte Ausgestaltungen und Weiterbildungen der Erfindung sind Gegenstand der Unteransprüche.

Es sind verschiedene vorteilhafte Anordnungen von Entfernungsmessern wahlweise vorgesehen. Es können an der Auswurfklappe rings um den Gutstrahl Ortungsstrahlen eine ring- oder rahmenförmige Abtastfläche beaufschlagen. Es genügen auch drei oder vorzugsweise vier schmale Ortungsstrahlen, die zu allen Seiten des Gutstrahles verteilt etwa parallel dazu ausgerichtet sind. So läßt sich stets das Erreichen der Bordwände feststellen und entsprechend eine Bewegungsumkehr der Auswurfklappe oder ein fortschreitendes Verschwenken des Auswurfkrümmers ansteuern. Eine weitere Variante ist die unabhängige Schwenkanordnung von zwei engen Ortungsstrahlen, die in parallelen Ebenen beidseitig des Gutstrahles laufend verschwenkt werden und so etwa quer zum Ladebehälter die jeweilige Ladeguthöhe und die Lage der Kanten der Seitenwände des Ladebehälters erfassen.

Die Geometrie des Auswerfers und die verschiedenen Schwenkwinkel des Drehkranzes, des Auswurfkrümmers, der Auswurfklappe und ggf. des Scanners werden laufend der Auswerte- und Steuervorrichtung gemeldet, die daraus unter Verhältnissen bei denen besondere Entfernungsmeßkriterien erfüllt sind, z. B. wenn eine große Weite beim Überschreiten einer Bordwand auftritt oder der Weitenänderungsgradient sich sprunghaft ändert, durch eine Koordinatentransformation aus den polaren oder toroidalen Meßkoordinaten in karthesische Koordinaten in Bezug auf die Fahrtrichtung und die Senkrechte errechnet, so daß sich Länge, Breite, Seitenabstand, Bodenhöhe, Bordwandhöhe, Füllstandshöhe usw. des Ladebehälters daraus ergeben.

Für die etwa meanderförmige Steuerung des Gutstrahles über die Ladefläche werden unterschiedliche Strategien geoffenbart, deren Einsatz passend zu der Anordnung der Entfernungsmesser angegeben ist.

In den Zeichnungen sind vorteilhafte Ausführungen dargestellt, welche nachfolgend näher erläutert werden. Es zeigt:
- Fig. 1: eine Draufsicht auf eine Erntemaschine mit einem Auswurfkrümmer und daran an einer Auswurfklappe angeordnetem Entfernungsmesser, welcher über einem Ladewagen positioniert ist,
- Fig. 2: eine Seitenansicht des auf einem Drehkranz gelagerten Auswurfkrümmers in waagerechter Stellung der Auswurfklappe,
- Fig. 3: eine Seitenansicht des Auswurfkrümmers in einer um fast 90° vertikal nach unten geneigten Stellung der Auswurfklappe,
- Fig. 4: ein Blockschaltbild mit einer elektronischen Auswerte- und Steuereinrichtung, Steuerventilen, Schaltern und Kontrollampen,
- Fig. 5: eine Draufsicht auf den Ladebehälter eines Ladewagens mit auftreffendem Gutstrom und vier um diesen angeordneten Abtastpunkten des Entfernungsmessers,
- Fig. 6: eine Draufsicht auf den Ladebehälter mit teilweise neben dem Ladebehälter liegenden Abtastpunkten des Entfernungsmesser,
- Fig. 7: einen senkrechten Schnitt durch einen teilweise gefüllten Ladebehälter mit zwei, unterschiedliche Füllhöhen signalisierenden, Abtastpunkten des Entfernungsmessers,
- Fig. 8: eine Draufsicht auf den Ladebehälter mit einer den auftreffenden Gutstrom umschließenden Abtastfläche des Entfernungsmesser,
- Fig. 9: eine Draufsicht auf den Ladebehälter wie in Fig. 8, jedoch mit einer teilweise außerhalb des Ladebehälters liegenden Abtastfläche,
- Fig. 10: eine Höhenskala und einen Längsschnitt durch einen Ladewagen mit darüber angeordnetem Entfernungsmesser,
- Fig. 10A: die Signalverläufe der mit den Ortungsstrahlen über den Entfernungsmesser gemessenen Entfernungen längs eines leeren Ladewagens,
- Fig. 11: eine Höhenskala und einen Querschnitt durch einen leeren Ladewagen mit darüber angeordneter Auswurfklappe mit dem Entfernungsmesser in der vertikal um 90° nach unten geneigten Stellung,
- Fig. 11A: Signalverläufe am Entfernungsmesser bei der Vertikalverschwenkung der Auswurfklappe mit dem Entfernungsmesser,
- Fig. 11B: den Steuerspannungsverlauf an den Neigungssteuerventilen für die Vertikalverschwenkung der Auswurfklappe,
- Fig. 12: eine Höhenskala und einen Längsschnitt durch einen teilweise gefüllten Ladewagen mit darüber angeordnetem Entfernungsmesser,
- Fig. 12A: Signalverläufe am Entfernungsmesser bei der Verschwenkung längs des teilweise gefüllten Ladebehälters,
- Fig. 13: eine Höhenskala und einen Querschnitt durch einen teilweise gefüllten Ladewagen mit darüber angeordneter Auswurfklappe mit dem Entfernungsmesser in der vertikal um 90° nach unten geneigten Stellung,
- Fig. 13A: Signalverläufe am Entfernungsmesser bei der Vertikalverschwenkung der Auswurfklappe über dem teilweise gefüllten Ladewagen,
- Fig. 13B: den Steuerspannungsverlauf an den Neigungs-Steuerventilen während der Verschwenkung,
- Fig. 14 bis 17: Stirnansichten verschiedener Ausführungsformen des Entfernungsmessers,
- Fig. 18: einen Querschnitt durch einen teilweise gefüllten Ladewagen mit einem auf das Füllgut auftreffenden Ortungsstrahl und den davon ausgehendem Bündel reflektierter Strahlen,
- Fig. 19: einen vergrößerten Ausschnitt des Abtastbereiches des Ortungsstrahles (vgl. Fig. 18) mit einfallenden Ortungsstrahlen und den reflektierten Strahlen,
- Fig. 20: eine Laserscanneranordnung an einem Auswurfkrümmer in Seitenansicht,
- Fig. 21A bis 21C: Aufsichten auf die Laserscanneranordnung in verschiedenen Scanner-Schwenkzuständen,
- Fig. 22: einen Ladebehälter im Querschnitt bei einem ersten Ladesteuerverfahren mit Lasercanner,
- Fig. 23 und 23A: einen Ladebehälterquerschnitt bei einem zweiten Ladesteuerverfahren in zwei Zuordnungen zum Auswurfort mit Laserscanner.

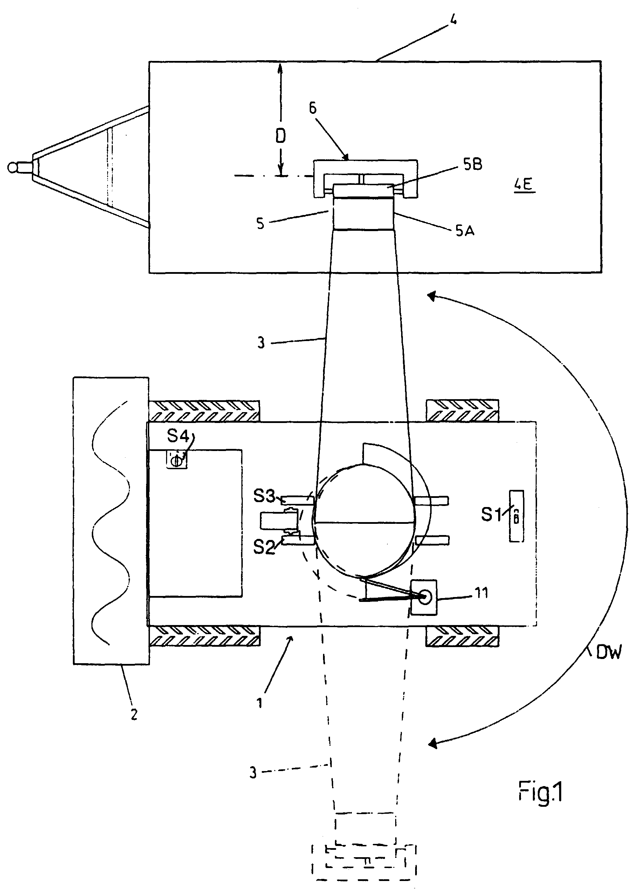

In Fig. 1 ist eine Erntemaschine (1), z. B. ein Feldhäcksler, mit Schneidwerk (2) und einem um 180° horizontal verschwenkbaren Auswurfkrümmer/Auswurfrohr (3) gezeigt. Der Auswurfkrümmer (3) dient dem Transport des geernteten Gutstromes (13) von der Erntemaschine (1) auf einen Ladebehälter (4), z. B. ein Ladewagen. An dem auswurfseitigen Ende des Auswurfkrümmers (3) ist eine zweigeteilte, vertikal schwenkbare Auswurfklappe (5) angeordnet. An der verschwenkbaren Auswurfklappe (5) befindet sich ein optischer und/oder akustischer Entfernungsmesser (6). Mit diesem Entfernungsmesser (6) lassen sich der Ladebehälter (4) nach Länge, Breite und Tiefe vermessen und die Füllstandshöhen (h) des Füllgutes (14) auf dem Ladebehälter (4) bestimmen. Außerdem ist damit überprüfbar, ob der Gutstrom (13) auf den Ladebehälter (4) trifft bzw. ganz oder teilweise an dem Ladebehälter (4) vorbei ausgeworfen wird. Der Entfernungsmesser (6) ist gemeinsam mit dem Auswurfkrümmer (3) und der Auswurfklappe (5) horizontal und/oder vertikal verschwenkbar.

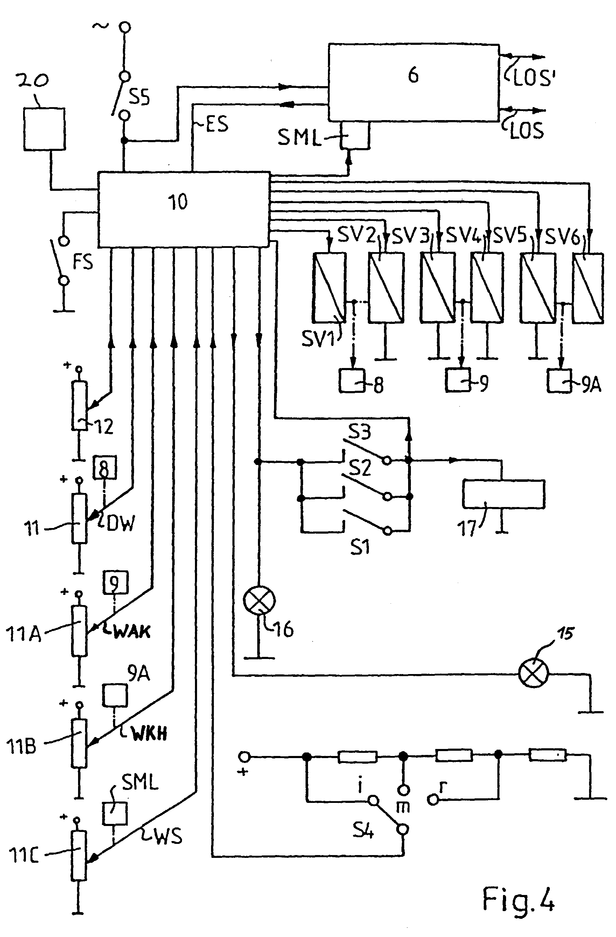

Die von dem Entfernungsmesser (6) erzeugten Entfernungssignale (ES) sind einer elektronischen Auswerte- und Steuereinrichtung (10) zugeführt (vgl. das Blockschaltbild auf Fig. 4). Die von einem Mikroprozessor mit digitalem Speicher gebildete Auswerte- und Steuereinrichtung (10) bewirkt, entsprechend den vom Entfernungsmesser (6) empfangenen Entfernungssignalen (ES), eine horizontale und/oder vertikale Verschwenkung des Auswurfkrümmers (3) und/oder der Auswurfklappe (5) zur Änderung der Auswurfrichtung des Gutstromes (13) auf den Ladebehälter (4), so daß eine möglichst verlustfreie und vollständige Befüllung des Ladebehälters (4) erzielt wird.

In die Auswerte- und Steuereinrichtung (10) ist eine maximale Füllstandshöhe für das Füllgut (14) auf den Ladewagen (4) eingebbar. Wenn diese Füllstandshöhe, gemessen mit dem Entfernungsmesser (6), lokal in dem jeweiligen Abtastbereich erreicht ist, bewirkt die Auswerte- und Steuereinrichtung (10) systematisch fortschreitend eine Verschwenkung des Auswurfkrümmers (3) und/oder der Auswurfklappe (5) zur Änderung der Auswurfrichtung, so daß der Gutstrom (13) fortlaufend an einer anderen Stelle des Ladebehälters (4) mit einer geringeren Füllstandshöhe (h) auftrifft, jedoch die Bordwand nicht trifft.

Die maximale Füllstandshöhe ist über ein Potentiometer (12) manuell einstellbar, dessen Ausgangsspannung der Auswerte- und Steuereinrichtung (10) zugeführt ist. Alternativ dazu wird die maximale Füllstandshöhe über eine Tastatur in die Auswerte- und Steuereinrichtung (10) eingegeben oder aus den anfangs bestimmten Laderaumdaten abgeleitet.

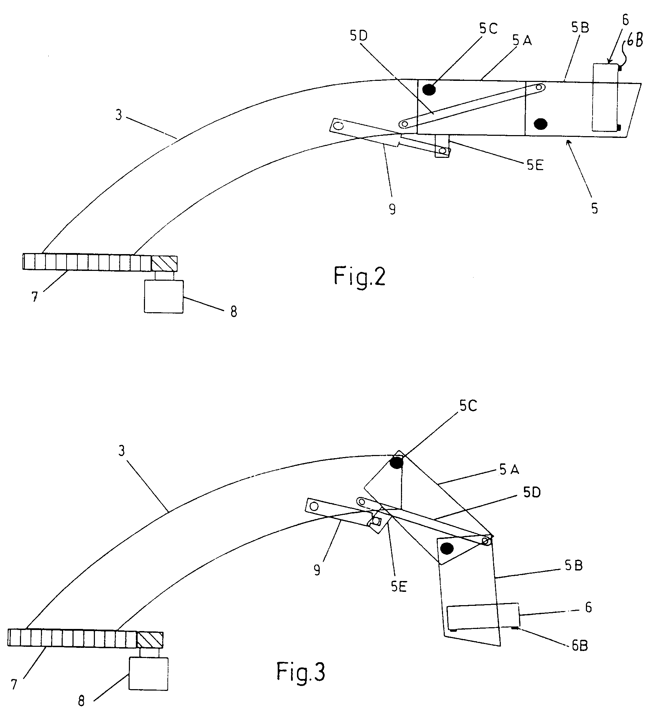

Der Auswurfkrümmer (3) ist auf einem Drehkranz (7) - vgl. Fig. 2 und 3 - in einem Schwenkwinkelbereich von etwa 180° zwischen zwei jeweils senkrecht zur Erntemaschinen-Längsrichtung angeordneten Schwenkwinkel-Endlagen horizontal schwenkbar gelagert. Damit kann ein Ladewagen (4) zur Aufnahme des Erntegutes auf der linken oder auf der rechten Seite in Parallelfahrt neben der Erntemaschine fahren. Der gesamte Auswurfkrümmer (3) kann stufenlos höhenverschwenkbar ausgeführt sein. In einer alternativen Ausführungsform beträgt der Schwenkwinkelbereich ca. 240°.

Auf den Figuren 2 und 3 sind Seitenansichten des Auswurfkrümmers (3) mit der Auswurfklappe (5) in der waagerechten und in der nach unten geneigten Stellung gezeigt. An dem Auswurfkrümmer (3) ist ein Hydraulikzylinder (9) angelenkt, der an einem an einem ersten Klappenabschnitt (5A) der Auswurfklappe (5) angeordneten Schwenkhebel (SE) zur Vertikalverschwenkung der Auswurfklappe (5) angreift. Der erste Klappenabschnitt (5A) der Auswurfklappe (5) ist in einer Schwenkachse (5C) am Auswurfkrümmer (3) gehalten. Der zweite, äußere Klappenabschnitt (5B) der Auswurfklappe (5) ist mit dem ersten Klappenabschnitt (5A) schwenkbar verbunden. Zusätzlich ist zwischen dem Auswurfkrümmer (3) und dem zweiten, äußeren Klappenabschnitt (5B) mindestens einseitig eine Verbindungs- und Haltestange (5D) angeordnet, welche jeweils an dem Auswurfkrümmer (3) und dem zweiten Klappenabschnitt (5B) drehbar gelagert ist. Somit bildet der erste Klappenabschnitt (5A) und die Haltestange (5D) ein Gelenkviereck, das den zweiten Klappenabschnitt (5B) mitschwenkend trägt.

Der Entfernungsmesser (6) ist in einem U-förmigen Gehäuse (6A) an dem nach unten offenen zweiten, äußeren Klappenteil (5B) der Auswurfklappe (5) und diesen von oben übergreifend angeordnet.

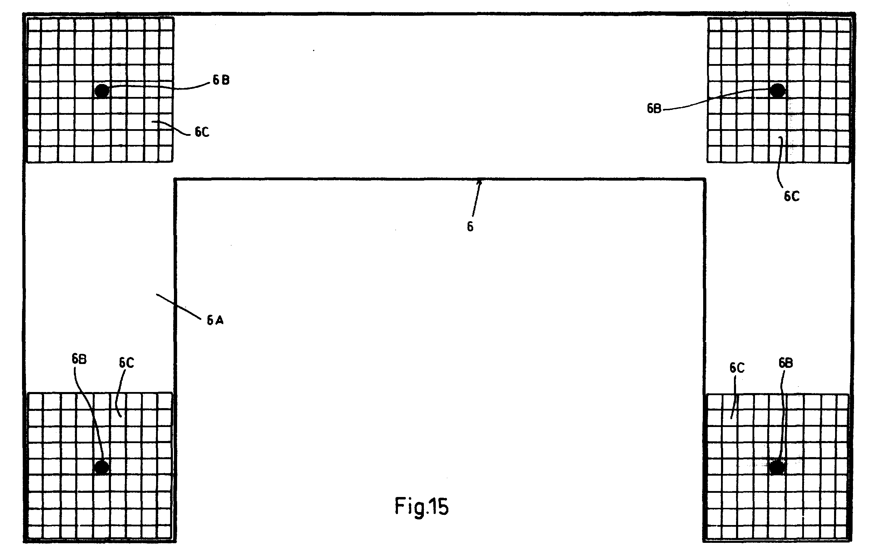

In einer Ausführungsform gemäß Fig. 15 wird der Entfernungsmesser (6) von einer LASER-Interferometer-Meßvorrichtung mit einem oder mehreren Sendern (6B), hier in Form von Sendelasern, und Empfängern (6C), hier in Form von Photoempfängern, gebildet.

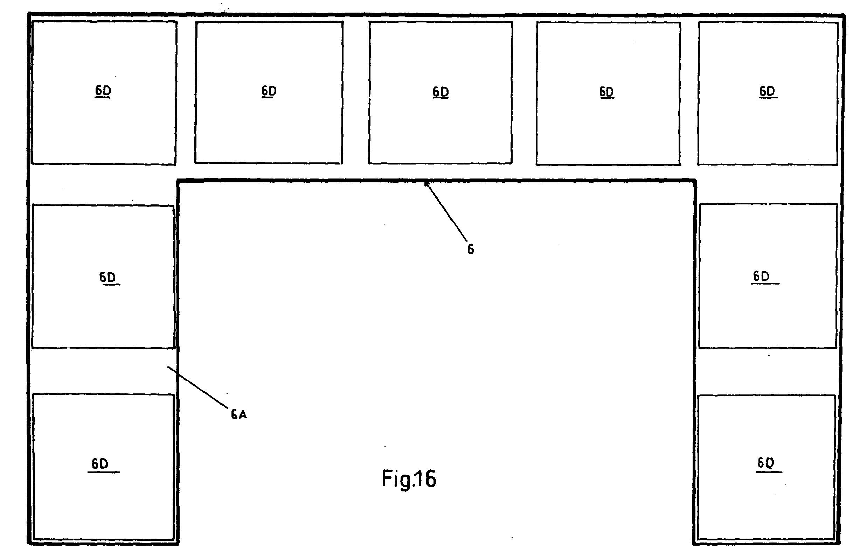

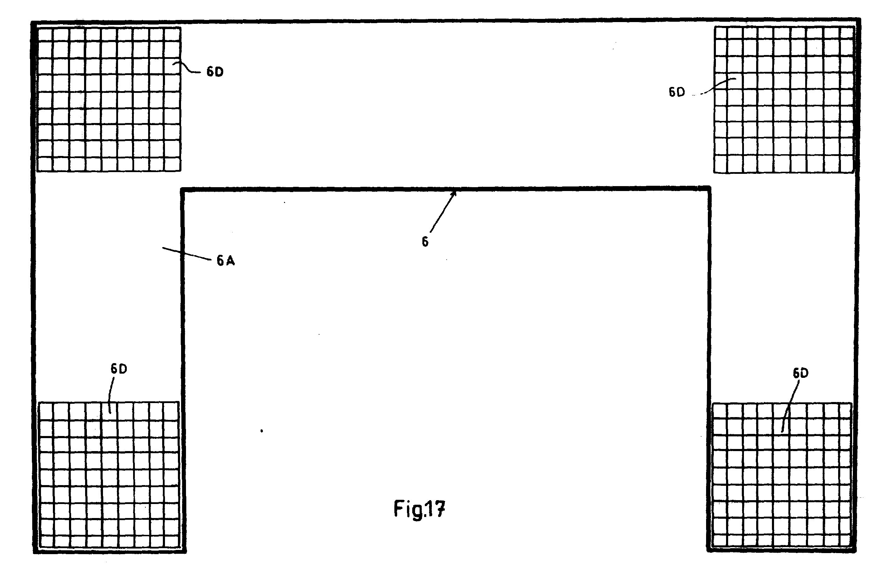

In einer alternativen Ausführungsform gemäß Fig. 16 und 17 wird der Entfernungsmesser (6) von einer Ultraschall-Meßvorrichtung mit einem oder mehreren Ultraschall-Sendern und -Empfängern (6D), wie Piezoelementen, gebildet.

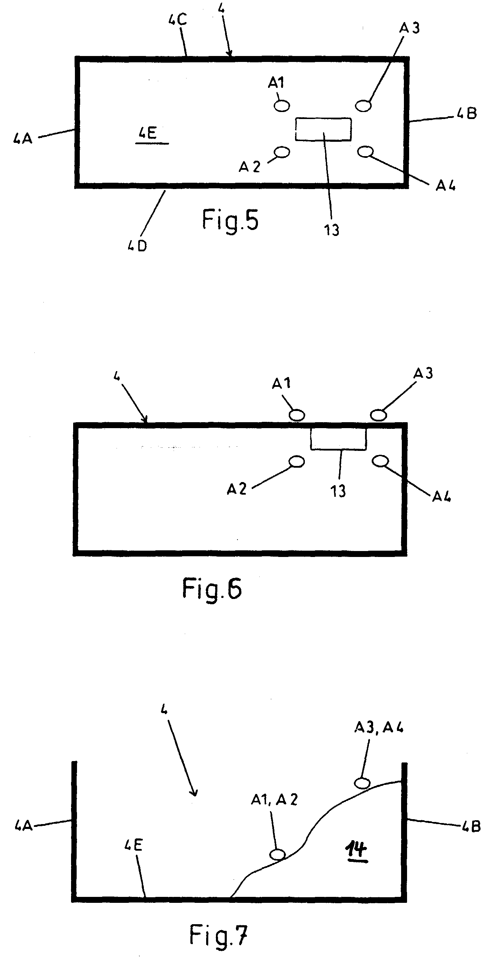

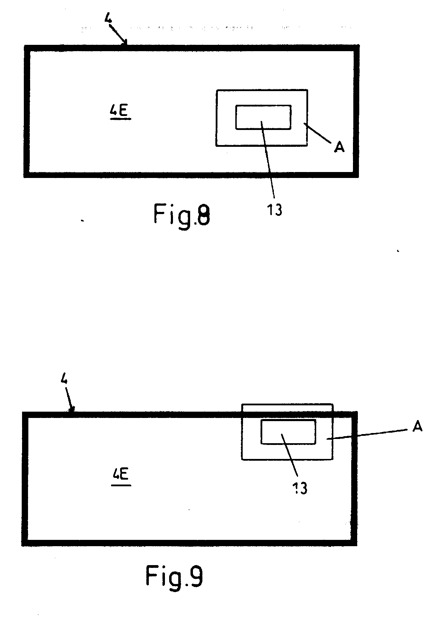

Die Sender und Empfänger des Entfernungsmessers (6) sind an der der Auswurfrichtung zugewandten Stirnseite des Gehäuses (6A) angeordnet. Die von dem Entfernungsmesser (6) ausgehenden Ortungsstrahlen (OS) treffen benachbart zum austretenden Gutstrom (13) auf den Ladebehälter (4) auf (vgl. Fig. 5, 6 und 8, 9). Außerdem verlaufen die Ortungsstrahlen (OS1, OS2) leicht divergent von der Tangential-Auswurfrichtung des aus der Auswurfklappe (5) ausgeworfenen Gutstromes (13) weg. Die von dem Entfernungsmesser (6) ausgesandten Ortungsstrahlen (OS) treffen vorzugsweise in mehreren um die Auftrefffläche des auf dem Ladebehälter (4) auftreffenden Gutstromes (13) herum verteilt angeordnete relativ kleinen Abtastflächen auf. In Fig. 5 und 6 sind vier rechteckförmig angeordnete Abtastflächen (A1, A2, A3, A4) dargestellt. Es ist jedoch auch vorgesehen, daß die Ortungsstrahlen (OS) eine den auf den Ladebehälter (4) auftreffenden Gutstrom (13) teilweise oder vollständig umschließende Abtastfläche (A) bilden (vgl. Fig. 8 und 9).

Zur Horizontalverschwenkung des Auswurfkrümmers (3) ist an dem Drehkranz (7) ein Motor (8), vorzugsweise ein Hydraulikmotor, angeordnet, der über zwei Steuerventile (SV1, SV2), eines für die Drehung nach rechts und eines für die Drehung nach links, ansteuerbar ist. Diese Steuerventile (SV1, SV2) werden von der Auswerte- und Steuereinrichtung (10) elektrisch in Abhängigkeit von den Entfernungssignalen (ES) und einem Steuerprogramm angesteuert (vgl. Fig. 4).

Der an der Auswurfklappe (5) vorgesehene Hydraulikzylinder (9) zur Vertikalverschwenkung derselben wird über zwei Neigungssteuerventile (SV3, SV4), eines für die Verschwenkung nach oben und eines für die Verschwenkung nach unten, angesteuert. Die Neigungssteuerventile (SV3, SV4) sind ihrerseits von der Auswerte- und Steuereinrichtung (10) entsprechend den von dem Entfernungsmesser (6) empfangenen Entfernungssignalen (ES) elektrisch ansteuerbar (vgl. Fig. 4). Die Ventile (SV1, SV2; SV3, SV4) sind vorzugsweise von Magnetventilen gebildet. Ggf. sind zwei weitere Ventile (SV5, SV6) zur Ansteuerung eines weiteren Hydraulikzylinders (9A) vorgesehen, der den Auswurfkrümmer (3) gegenüber dem Drehkranz (7) verschwenkt. Der zugehörige Auswurfklappenwinkel (WAK) wird von einem Potentiometer (11A) der Steuervorrichtung (10) signalisiert.

An dem Auswurfkrümmer (3) ist außerdem ein vorzugsweise als Potentiometer ausgebildeter Positionsmelder (11) zur Meldung des jeweiligen Drehkranz-Schwenkwinkelsignals (DW) an die Auswerte- und Steuereinrichtung (10) vorgesehen. Dieser Positionsmelder (11) ist vorzugsweise von einem Potentiometer gebildet, das mit der Horizontalverschwenkung des Auswurfkrümmers (3) verstellt wird. An der Erntemaschine (1) ist in den beiden Schwenkwinkel-Endlagen je ein Endschalter (S2, S3) vorgesehen, dessen jeweilige Schaltzustände (Auf, Zu) der Auswerte- und Steuereinrichtung (10) zugeführt sind (vgl. Fig. 1 und Fig. 4). Hierdurch ist eine Normierung des Drehkranzschwenkwinkelsignales (DW) und eine unmittelbare Ausrichtung in die Vorzugsstellungen einfach ansteuerbar. Bei An- und Abfahrten zu oder von einem Ernteeinsatz auf der Landstraße wird der Auswurfkrümmer (3) entgegen der Fahrtrichtung nach hinten in eine Parkposition verschwenkt. Diese Stellung des Auswurfkrümmers (3) wird der Auswerte- und Steuereinrichtung (10) über einen Parkkontaktschalter (S1) ebenfalls angezeigt.

Die Vorrichtung weist einen manuell zu betätigenden Positionsauswahlschalter (S4) mit drei Schalterstellungen auf, der vorzugsweise in der Fahrerkabine der Erntemaschine (1) angeordnet ist. Die Schalterstellungen sind zur Übersteuerung der Automatikeinstellung der Auswerte- und Steuereinrichtung (10) zugeführt, welche je nach Schalterstellung die Steuerventile (SV1, SV2) für die Horizontalverschwenkung des Auswurfkrümmers (3) betätigt. In der Mittelstellung (m) des Positionsauswahlschalters (S4) wird der Auswurfkrümmer (3) in die Parkstellung verschwenkt, in der linken Stellung (l) des Schalters (S4) wird der Auswurfkrümmer (3) in eine zur Fahrtrichtung linke Position verschwenkt und in der rechten Schaltstellung (r) in eine zur Fahrtrichtung rechte Position (vgl. Fig. 4).

An der Auswurfklappe (5) ist vorzugsweise ein zweiter, vorzugsweise als Potentiometer ausgebildeter Positionsmelder (11A) zur Anzeige der Neigestellung der Auswurfklappe (5) an die Auswerte- und Steuereinrichtung (10) vorgesehen.

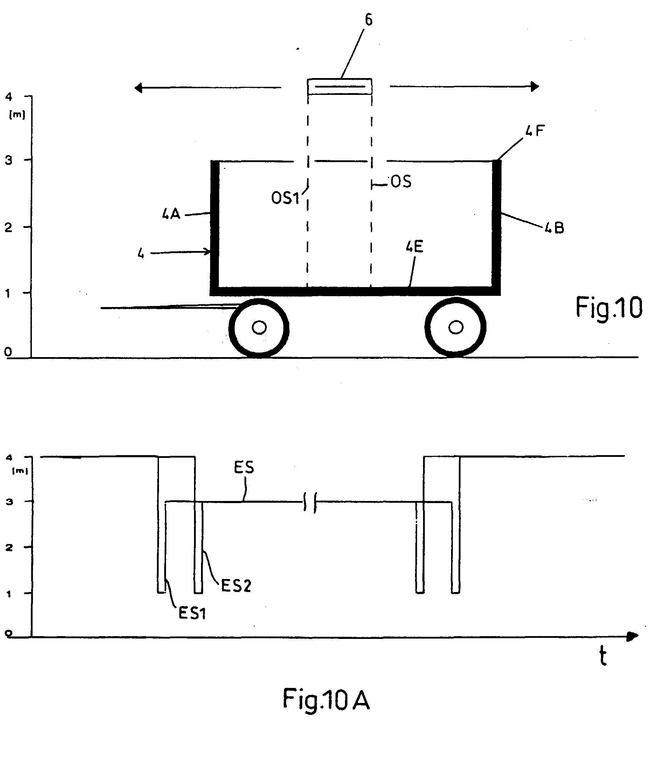

In Fig. 10 ist eine Höhenskala mit einem leeren Ladewagen (4) im Längsschnitt dargestellt. Über dem Ladewagen (4) ist der nach unten geneigte Entfernungsmesser (6) angeordnet.

Der bei der Horizontalverschwenkung des Auswurfkrümmers (3) über dem Ladewagen (4) oder bei dem Verfahren des Ladewagens (4) gegenüber dem Auswurfkrümmer (3) mit dem Entfernungsmesser (6) gemessene Signalverlauf ist in der Figur 10A dargestellt. Dort sind die mit den eingezeichneten Ortungsstrahlen (OS1, OS2) ermittelten Höhenunterschiede in Abhängigkeit von der Zeit (t), z. B. der Verschwenkzeit, dargestellt. Dieser Signalverlauf ist in der Auswerte- und Steuereinrichtung (10) abspeicherbar. Das Signal (ES1) korrespondiert zu dem Ortungsstrahl (OS1) und das Signal (ES2) zu dem Ortungsstrahl (OS2). Auf diese Weise ist der Höhenunterschied zwischen den oberen Rändern (4F) der Ladebehälter-Wände (4A, 4B, 4C, 4D) und dem Ladebehälter-Boden (4E) zu ermitteln. Unter Berücksichtigung von dem jeweiligen Schwenkwinkel und der Verschwenkzeit, die zwischen der Registrierung der vorderen und hinteren Ladebehälter-Wand (4A, 4B) vergeht, läßt sich über die Auswerte- und Steuereinrichtung (10) die Länge des Ladebehälters (4) bestimmen.

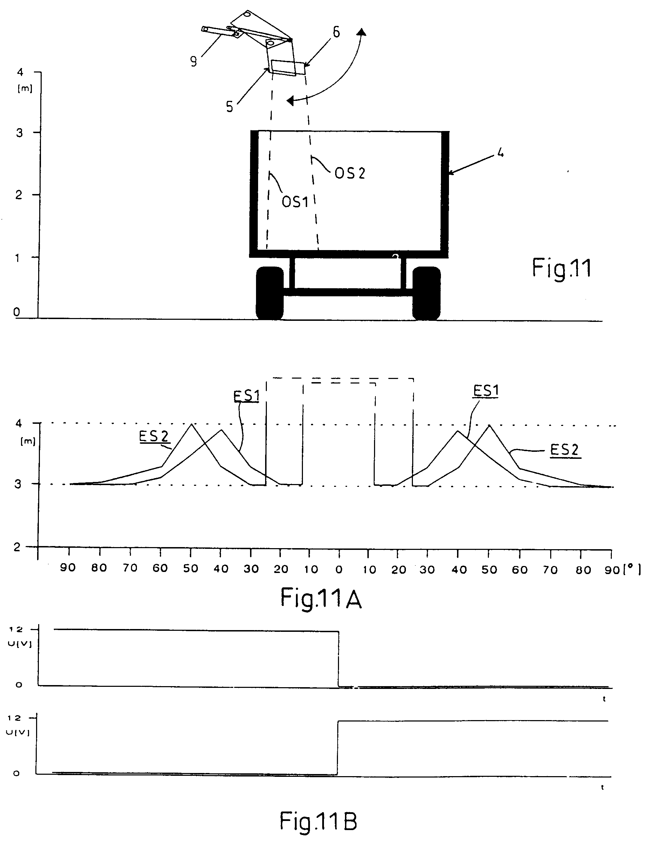

In Fig. 11 ist eine Höhenskala mit einem leeren Ladewagen (4) im Querschnitt dargestellt. Über dem Ladewagen (4) befindet sich die Auswurfklappe (5) mit dem Entfernungsmesser (6) in der vertikal nach unten geneigten Stellung. Zur Quervermessung des Ladebehälters (4) wird die Auswurfklappe (5) mit dem Entfernungsmesser (6) ausgehend von dieser Stellung nach oben in die waagerechte Stellung und zurück in die eingezeichnete Ausgangsstellung vertikal verschwenkt. Die mit den eingezeichneten Ortungsstrahlen (OS1, OS2) ermittelten Entfernungssignale (ES1, ES2) sind gegenüber dem Neigungsschwenkwinkel in Fig. 11A dargestellt. Aus diesen Entfernungssignalen (ES1, ES2) läßt sich in Verbindung mit den jeweiligen Neigungsschwenkwinkeln (untere Skala) durch eine Koordinatentransformation die Breite und die Höhe des Ladebehälters (4) bestimmen. Für die Querprofilvermessung wird der Auswurfkrümmer vorzugsweise quer eingestellt, so daß ausgehend von einfachen Polarkoordinaten gerechnet werden kann. In Fig. 11B sind die vorgegebenen Steuerspannungen an den Neigungssteuerventilen (SV3, SV4) während des Verschwenkens dargestellt.

Aus der so gemessenen und errechneten Länge, Breite und Höhe des Laderaumes ist das Ladevolumen des Ladebehälters (4) von der Auswerte- und Steuereinrichtung (10) bestimmbar. Außerdem ist bei bekanntem Schüttverhalten des Ladegutes aus den Querschnitt- und Höhenmaßen über die Auswerte- und Steuereinrichtung (10) eine maximale Füllstandshöhe, die einen ausreichenden Laderand beläßt, bestimmbar.

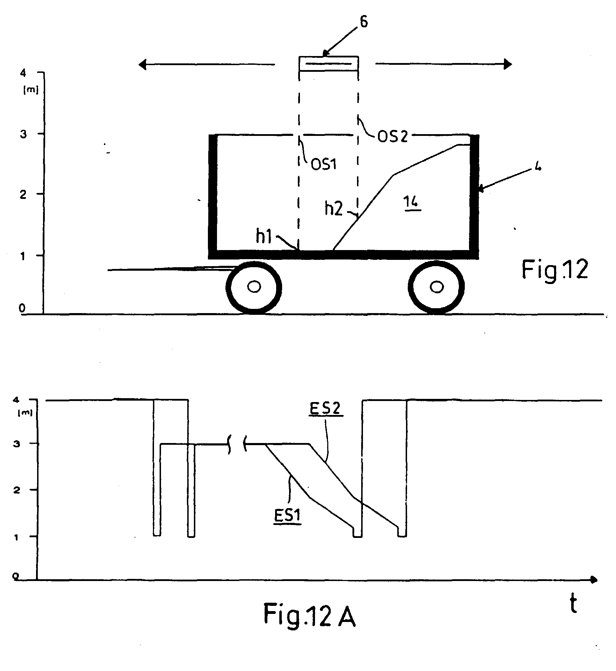

In Fig. 12 ist eine Höhenskala mit einem teilweise gefüllten Ladewagen (4) im Längsschnitt dargestellt. Über dem Ladewagen (4) ist der nach unten geneigte Entfernungsmesser (6) angeordnet. Die mit den eingezeichneten Ortungsstrahlen (OS1, OS2) ermittelten Entfernungssignale (ES1, ES2) sind in Fig. 12A gegenüber der Verschwenkzeit (t) dargestellt. Der Entfernungssignalverlauf ist spiegelbildlich zum Verlauf der lokal gemessenen Füllstandshöhen (h1, h2).

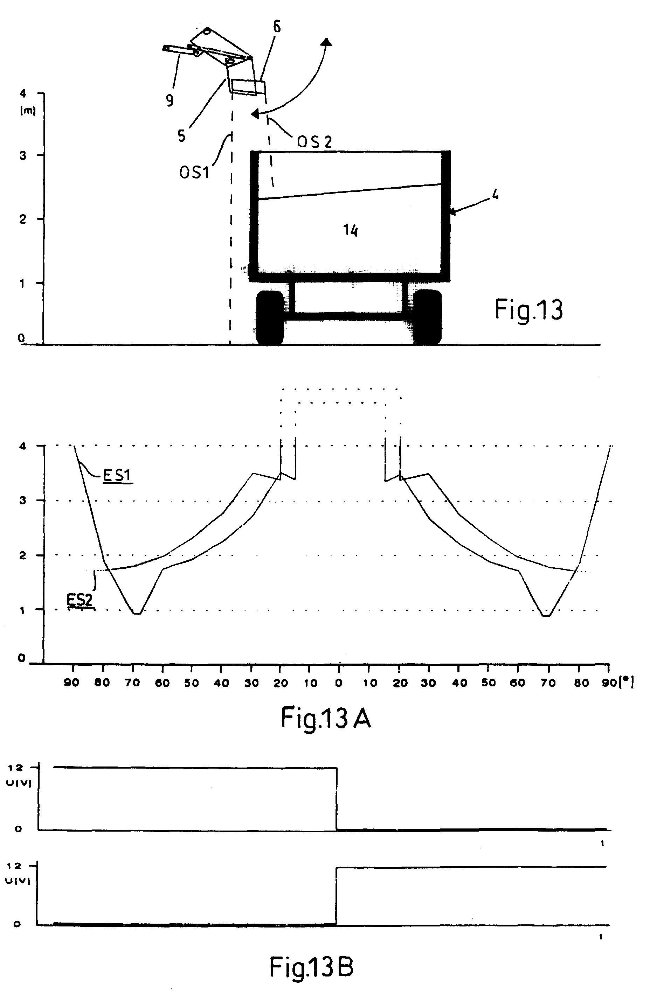

In Fig. 13 ist eine Höhenskala mit einem teilweise gefüllten Ladebehälter (4) im Querschnitt dargestellt. Die nach unten geneigte Auswurfklappe (5) mit dem Entfernungsmesser (6) befindet sich über einer seitlichen Ladebehälter-Wand. Die mit den eingezeichneten Ortungsstrahlen (OS1, OS2) ermittelten Entfernungssignale (ES1, ES2) sind gegenüber dem Neigungsschwenkwinkel in Fig. 13A dargestellt. Auch diese Entfernungs- und Winkelsignale werden zweckmäßig von der polaren in die karthesische Form transformiert. In Fig. 13B sind die jeweils vorgegebenen Steuerspannungen an den Neigungssteuerventilen (SV3, SV4) während des Verschwenkens dargestellt. Das Überschreiten der Bordwand durch einen Ortungsstrahl wird jeweils durch ein sprunghaft großes Entfernungsmaß signalisiert.

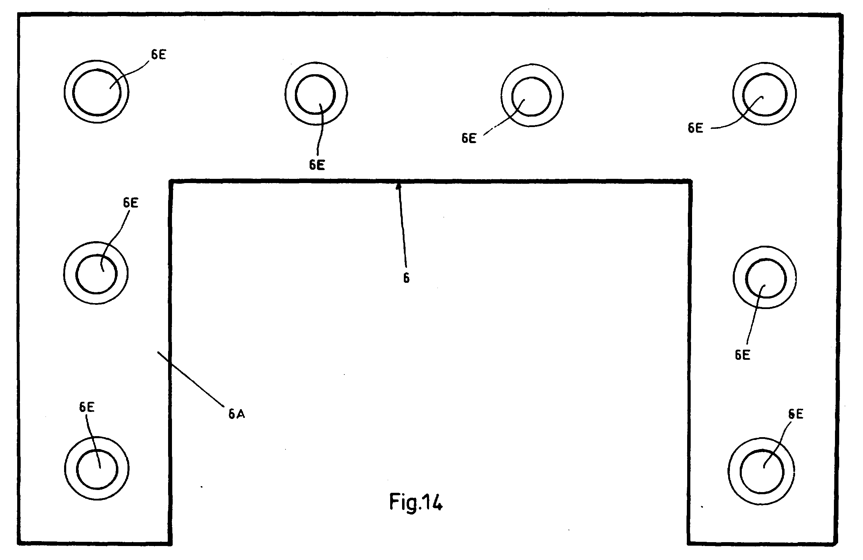

In Fig. 14 ist die Stirnansicht auf das Gehäuse (6A) einer Ausführungsform des Entfernungsmessers (6) gezeigt. Auf der Stirnfläche sind entlang dreier Seiten des Gutstromaustritts mehrere Ein- und Austrittslinsen (6E) verteilt angeordnet, durch die die Ortungsstrahlen (OS) austreten und die vom Ladebehälter (4), dem Füllgut (13) oder dem Feldboden reflektierten Strahlen (RS) in den Entfernungsmesser (6) auf den/die Empfänger gelangen.

Bei der in Fig. 15 gezeigten Ausführungsform des Entfernungsmessers (6) befinden sich auf der Stirnfläche des Gehäuses (6A) vier rechteckig angeordnete Sender (6B), hier in Form von Sendelasern, die jeweils von einem Array aus einzelnen Empfängern (6C), hier in Form von Photoempfängern umgeben sind. Durch eine geeignete Phasenansteuerung der einzelnen Photoempfänger ist eine optimale Einstellung der Empfangsrichtcharakteristik zum Empfang der reflektierten Stahlen (RS) erreichbar. Die vier Ortungsstrahlen umgeben den Gutstromaustritt an allen Seiten.

In Fig. 16 ist eine Ausführungsform des Entfernungsmessers (6) mit über die Stirnfläche des U-förmigen Gehäuses (6A) gleichmäßig verteilt angeordneten Piezoelementen (6D) als Ultraschall-Sender und -Empfänger gezeigt.

Die in Fig. 17 dargestellte Ausführungsform des Entfernungsmessers (6) weist Arrays aus einzelnen Piezoelementen (6D) auf, die als Ultraschall-Sender und -Empfänger wirken. Die Verteilung der Arrays ist jeweils auf alle vier Seiten des Gutstromaustritts.

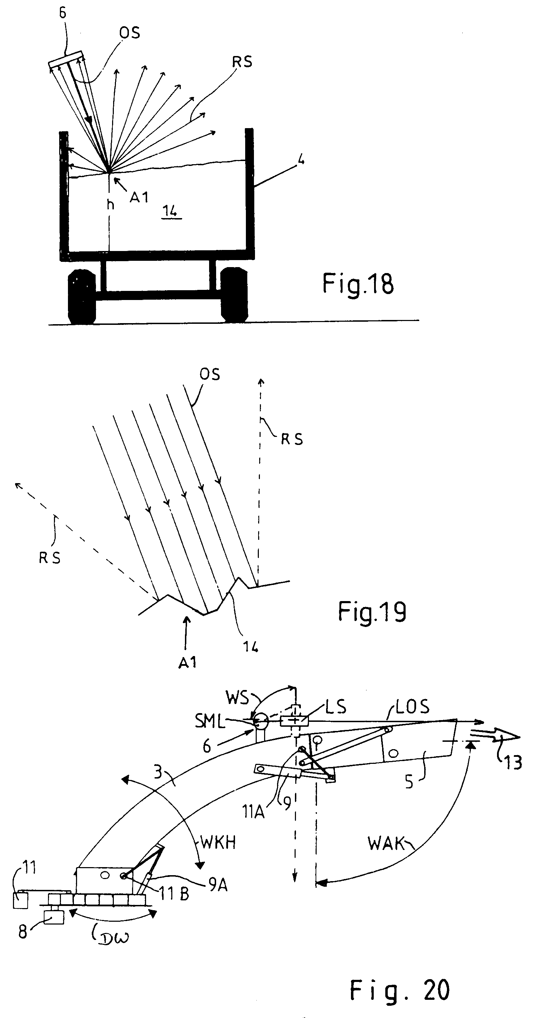

In Fig. 18 ist ein teilweise mit Füllgut (14) beladener Ladewagen (4) dargestellt. Auf das Füllgut (14) fällt ein Ortungsstrahl (OS) und bildet dort eine kleine Abtastfläche (A1). Von dieser Abtastfläche (A1) geht ein Bündel aus in verschiedene Richtungen weisenden, reflektierten Strahlen (RS) aus. Ein Teil der Strahlen wird immer auch zum Entferungsmesser (6) reflektiert und gelangt dort auf den/die Empfänger und wird mittels einer Laufzeitmessung zur Entfernungsmessung benutzt.

Bei einem Füllgut (14), z.B. Silage, ist die Oberfläche nicht ideal glatt, sondern aufgrund unterschiedlicher Orientierungen einzelner Fasern o.dgl. relativ uneben. Dies hat zur Folge, daß parallel einfallende Ortungsstrahlen (OS) diffus gestreut werden. Dies ist in Fig. 19 verdeutlicht, wo der Bereich der Abtastfläche (A1) gegenüber Fig. 18 vergrößert dargestellt ist. Auch die geringen Oberflächenrauhigkeiten der Ladebehälter-Wände und des Bodens sind ausreichend dafür, daß immer auch ein Teil der unter verschiedenen Winkeln auf den Ladebehälter (4) auftreffenden Ortungsstrahlen (OS) zum Empfänger reflektiert wird.

Der Entfernungsmesser (6) sowie die automatische Verschwenksteuerung zur Änderung der Auswurfrichtung werden durch die Betätigung eines Hauptschalters (S5) (Fig. 4) aktiviert. Die Auswerte- und Steuereinrichtung (10) betätigt eine optische oder akustische Anzeige (15), wenn der Ladebehälter (4) so weit gefüllt ist, daß an keiner Stelle die lokale Füllstandshöhe (h) mehr unter der vorbestimmbaren maximalen Füllstandshöhe liegt. Über eine Kontrollampe (16) wird dem Fahrer angezeigt, wenn die automatische Verschwenksteuerung eingeschaltet ist. Über eine weitere optische oder akustische Anzeige (17) wird dem Fahrer mitgeteilt, daß sich der Auswurfkrümmer (3) in einer Schwenkwinkel-Endlage oder in der Parkstellung befindet. Ob sich die den Gutstrom umgebende Abtastfläche (A) oder mindestens eine der kleinen Abtastflächen (A1 bis A4) außerhalb des Ladebehälters (4) befinden wird von der Steuervorrichtung (10) ständig überwacht und ggf. über eine optische oder akustische Warnvorrichtung angezeigt.

Bedingt durch die fahrtbedingte laufende Relativbewegung zwischen dem Auswerfer und dem Ladebehälter (4) ist es vorteilhaft, den Auftreffbereich des Gutstrahls (13) ständig zu bestimmen. Dazu ist ein dauerndes Abscannen des Ladebehälters (4) vorgesehen, mit einem beweglichen Entfernungsmesser (6), einem Laserscanner. Der Auftreffbereich ist, bedingt durch die Geometrie des Krümmers (3), von folgenden Faktoren abhängig:
- Auswurfklappenwinkel (WAK) der Auswurfklappe (5), (Fig. 20),
- der Krümmerhöhe, die durch Krümmerhöhenwinkel (WKH) bestimmt ist,
- der Auswurfrichtung, d.h. dem Drehkranzschwenkwinkelsignal (DW), Fig. 1.

Gemäß Fig. 20 und Fig. 4 werden mit Hilfe der vorzugsweise als Potentiometer ausgebildeteten Positionsmelder (11, 11A bis 11B) die gegebenen Auswurfklappenwinkel (WAK) der Auswurfklappe (5), der Krümmerhöhenwinkel (WKH) sowie das Drehkranzschwenkwinkelsignal (DW) in elektrische Spannungen umgewandelt, die von der Steuereinrichtung (10) ausgewertet werden. Mit diesen ermittelten Auswurfklappenwinkeln (WAK), Krümmerhöhenwinkel (WKH), Drehkranzschwenkwinkelsignal (DW) wird der günstigste Auftreffbereich des Gutstrahles (13) berechnet.

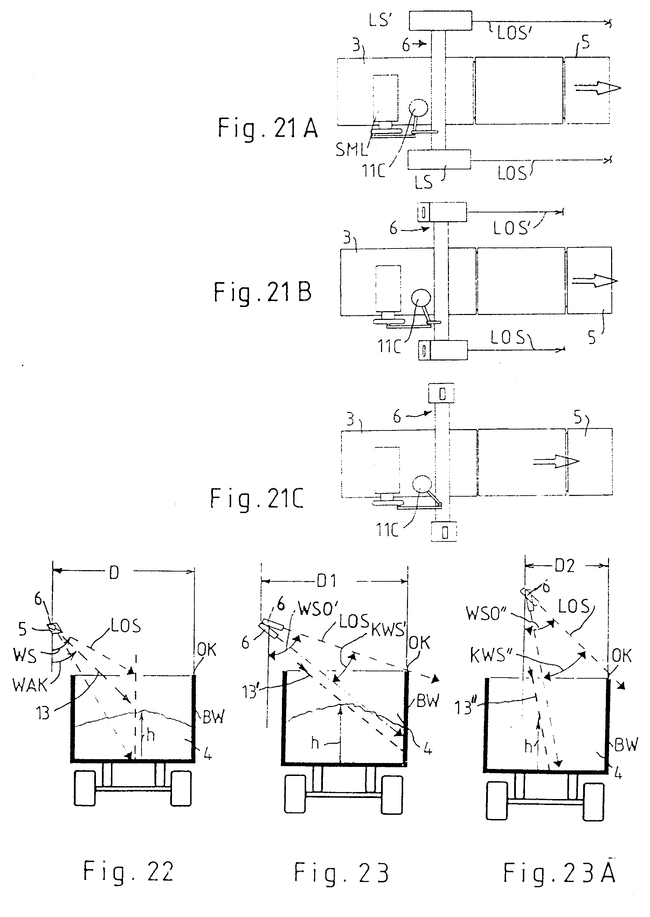

Die Fig. 21A bis 21C zeigen Aufsichten auf die Krümmer (3) mit der steuerbaren Klappe (5) und dem Entfernungsmesser (6) in Scannerausführung. Es sind zwei Laserentfernungsmesser (LS, LS'), die die Laserortungsstrahlen (LOS, LOS') senden und das Reflexlicht empfangen beidseitig des Krümmers (3) an einer horizontalen Schwenkachse montiert, die durch den Laserschwenkmotor (SML) um einen Scannerschwenkwinkel (WS) zwischen der horizontalen und vertikalen Einstellung verschwenken, was für den Scannerwinkel Null in Fig. 21C, einen kleinen Winkel in Fig. 21B und für einen größeren Winkel in Fig. 21A gezeigt ist. Der jeweilige Scannerschwenkwinkel (WS) wird durch das Scannerpotentiometer (11C) der Steuervorichtung (10) signalisiert; Fig. 4.

Die Krümmerhöhe, die im allgemeinen einmalig den Verhältnissen angepaßt wird, läßt sich mit dem Hydrauliksteller (9A), Fig. 20, durch elektromagnetische Steuerventile (SV5, SV6), Fig. 4, steuern, wobei der Krümmerhöhenwinkel (WKH) an die Steuervorrichtung (10) vom vorzugsweise als Potentiometer ausgebildeten Positionsmelder (11B) rückgemeldet wird.

Für ein ständiges Abscannen des Ladebehälters (4) ist die Laserscannvorrichtung (SML, LS) als Ausgestaltungsform eines Entfernungsmessers (6) vorgesehen, die es ermöglicht, die Laserorter (LS, LS') innerhalb eines bestimmten Scannerwinkels (WS) zu bewegen. Der Anbringungsort der Scannervorrichtung kann prinzipiell sowohl am beweglichen Klappenteil (5) des Krümmers (3) als auch am Krümmer (3) selbst sein, wie dargestellt.

Nach einem ersten Verfahren arbeitet diese Vorrichtung mit dem Laserscanner so, daß der Auftreffbereich des Gutstrahls (13, 13') immer etwa in der Längsachse in der Ladebehälterquerschnittsmitte liegt, wie Fig. 22 zeigt. Bei den Ladebehältern (4) kann man von einer Standardbreite von 2,50 m ausgehen, oder sie wird wie vorbeschrieben ermittelt. Ortet der Sensorstrahl (LOS) die Oberkante (OK) der vom Häcksler (1) abgewandten Bordwand (BW), wird aus den in diesem Moment vorliegenden drei Winkeln (WS, DW, WKH) die Entfernung (D) der Auswurfklappe (5) zur abgelegenen Seitenbordwand (BW) berechnet. Da der Krümmerhöhenwinkel (WKH) während des Befüllens in der Regel nicht verändert wird und die Füllhöhe (h) nach jedem Scanner-Zyklus bekannt ist, wird abhängig von der jeweiligen Füllhöhe (h) ein Winkel (WAK) der Auswurfklappe (5) berechnet und eingestellt, so daß der Auftreffbereich des Gutstrahls (13) genau in der Ladebehälterquerschnittsmitte in der jeweiligen Füllhöhe (h) liegt. Insbesondere bei senkrechter Befüllung, was jedoch ein möglichst abstandskonstantes Fahren des Ladebehälters zum Häcksler bedingt, läßt sich der Ladebehälter (4) auf diese Weise optimal befüllen.

Nach einem zweiten Verfahren arbeitet die Vorrichtung mit dem Laserscanner so, daß eine laufende Einstellung der Auswurfklappe (5) in Abhängigkeit vom Oberkanten-Scannerwinkel (WSO', WSO'') beim Ermitteln der Oberkante (OK) der abgelegenen Seiten-Bordwand (BW) erfolgt. Dieses Verfahren verdeutlichen die Fig. 23 und 23A.

Ausgehend von der Praxisbeobachtung, daß die Auswurfklappe (5) in erster Linie für den Auftreffbereich des Gutstrahles (13) auf den Ladebehälter (4) maßgeblich ist, wird der Oberkanten-Scannerwinkel (WSO', WSO'') beim Erfassen der Oberkante (OK) der abseitigen Bordwand (BW) ermittelt. Entsprechend der Größe des jeweiligen Oberkanten-Scannerwinkels (WSO', WSO'') wird die Auswurfklappe (5) mehr oder weniger weit zurückgezogen; bei einem kleinen Oberkanten-Scannerwinkel (WSO'') wird die Klappe (5) um einen größeren Klappenrückzugswinkel (KWS'') zurückgezogen; bei einem großen Oberkanten-ScannerWinkel (WSO') wird sie nur wenig, also um einen kleineren Klappenrückzugswinkel (KWS'), zurückgezogen, wobei der jeweilige sogenannte Rückzugswinkelbereich (KWS', KWS'') von dem zugehörigen Oberkanten-Scannerwinkel (WSO', WSO'') aus in Verbindung mit einer Erfahrungsfunktion nach unten orientiert bestimmt wird. Dies führt zu einem Effekt, daß sich der Auftreffbereich mit zunehmender Füllhöhe (h) von der Bordwand (BW) weg verlagert. Für eine schräge Befüllung bei stärkerem oder wechselndem seitlichen Versatz (D1, D2) des Ladebehälters (4) von der Auswurfklappe (5) hat dies den Vorteil, daß die Gutverluste minimiert werden.

Somit ergeben sich sehr einfache Steuerprogramme und nur geringe Schwenkbewegungen der Auswurfklappe (5). Mit dem Entfernungsmesser (6), hier in einer Ausgestaltung mit einem Scanner, werden beim ersten Verfahren pro Scan-Schwenk jeweils die seitliche Bordwandlage (D) zur Auswurfklappe (5) und die Füllhöhe (h) bestimmt. Beim zweiten Verfahren wird ständig nur der Oberkanten-Scannerwinkel (WSO', WSO'') beim Erkennen der Bordwandkante (OK) ermittelt. Hierzu brauchen jeweils nur marginale Schwenkwinkelveränderungen der Verschwenkvorrichtung (SML) vorgegeben zu werden, so daß die Laserortungsstrahlen (LOS) um die Oberkante (OK) pendeln und nur von Zeit zu Zeit zur Füllstandsmessung voll durchschwenken. Die Steuerung des zugehörigen Klappenrückzugswinkel (KWS', KWS'') wird unmittelbar aus dem jeweils an der Oberkante (OK) gemessenen Oberkanten-Scannerwinkels (WSO', WSO'') bestimmt. Bei dieser Bestimmung lassen sich die ggf. anfangs vermessenen Behältergrößen, wie Breite, Bordwandhöhe, zweckmäßig einbeziehen, wenn unterschiedliche Behältertypen zum Einsatz kommen.

Da die Scannerortungsstrahlen (LOS, LOS') die Front- und Heckseite des Auswerfers flächenmäßig bestreichen, genügen hierbei nur zwei Laserstrahler, wohingegen bei einer festen Anordnung der Entfernungssensoren an der Auswurfklappe mindestens drei Stück notwendig sind, um ein Überschreiten der Bordwände (BW) mit dem Ladegutstrom zu verhindern; zweckmäßig sind jedoch vier Entfernungssensoren vorgesehen.

Prinzipiell genügt auch ein feststehender Ortungsstrahl auf einer Seite des Gutstrahles und ein verschwenkender auf der anderen Seite. Der feststehende Ortungsstrahl hat lediglich die Aufgabe, das Annähern des Gutstrahles an eine der Stirnwände des Ladebehälters zu melden.

Weiterhin kann auch ein einziger Scannerstrahl in zwei Richtungen, beispielsweise in einer schmalen Ellipse oder Lissajoufigur, vorzugsweise annähernd U-förmig, abgelenkt werden, die den Bereich in Fahrtrichtung vor und hinter dem Gutstrahl sowie die Bordwandkante seitlich des Ladeortes durchläuft. Dazu wird zweckmäßig die Ablenkamplitude in der Fahrtrichtung wesentlich kleiner als die seitliche Amplitude gewählt und die Frequenz der Längsablenkung halb so groß wie die Querablenkfrequenz gewählt.

Durch Festlegung der Phasenbeziehung werden je einer der Umkehrpunkte jeweils etwas vor bzw. hinter den Gutstrahl gelegt und die anderen Umkehrpunkte hinter die abseitige Bordwand.

## Patentansprüche

1. Vorrichtung zur automatischen Befüllung von einem fahrbaren Ladebehälter (4) mit einem Gutstrom (13), welche einen/ein um eine vertikale und horizontale Achse oder eine vertikale Achse von einer Auswerk- und Steuereinrichtung (10) gesteuert verschwenkbaren/verschwenkbares Auswurfkrümmer/Auswurfrohr (3, 5), gegebenenfalls mit einer endseitigen, schwenkbaren Auswurfklappe (5), aufweist, wobei der Auswurfkrümmer bzw. das Auswurfrohr (3, 5) mit mindestens einem vertikal und/oder horizontal verschwenkbaren Entfernungmesser (6) ausgestattet ist, der die Füllstandshöhe h des Gutes im fahrbaren Ladebehälter (4) relativ zur maximal möglichen Füllstandshöhe im fahrbaren Ladebehälter (4) erfaßt, und der verschwenkbare Entfernungsmesser (6) im auswurfseitigen Endbereich des Auswurfkrümmers/Auswurfrohrs (3, 5) angeordnet ist,
**dadurch gekennzeichnet,**
daß der Entfernungsmesser (6) aus einem optischen und/oder akustischen Entfernungsmesser (6) besteht, der Entfernungssignale (ES) erzeugt, die von diesem Entfernungsmesser (6) erzeugten Entfernungssignale (ES) einer elektronischen Auswerte- und Steuereinrichtung (10) zugeführt sind, welche aus den Entfernungssignalen (ES) mittels eines Steuerprogramms die jeweilige Füllstandshöhe (h) und die Lage der Kanten der Seitenwände des Ladebehälters (4) erfaßt und die Entfernungssignale (ES) laufend zu elektrischen Stellsignalen auswertet, die an Steuerventile (SV1-SV6) zu deren Betätigung übermittelt sind, und wobei das Steuerprogramm die Stellsignale unter Auswertung der zugeführten Entfernungssignale (ES) so bestimmt, daß die Auswurfrichtung des Gutstromes (13) innerhalb der Lage der Kanten des Ladebehälters (4) liegt.

2. Vorrichtung nach Anspruch 1, dadurch gekennzeichnet, daß der Entfernungsmesser (6) von einer LASER-Interferometer-Meßvorrichtung mit einem oder mehreren Sendern (6B) in Form von Sendelasern und Empfängern (6C) in Form von Photoempfängern gebildet ist, wobei die von dem Sendelaser ausgehenden Ortungsstrahlen (OS, LOS, LOS') vom Ladebehälter (4), dem Füllgut (14) und/oder dem Feldboden zumindest teilweise zu den Photoempfängern reflektiert werden, oder daß der Entfernungsmesser (6) von einer Ultraschall-Meßvorrichtung mit einem oder mehreren Ultraschall-Sendern und -Empfängern (6D), wie Piezoelementen, gebildet ist, wobei die von den Ultraschall-Sendern ausgehenden Ortungsstrahlen (OS) vom Ladebehälter (4), dem Füllgut (14) und/oder dem Feldboden zumindest teilweise zu den Empfängern reflektiert werden.

3. Vorrichtung nach einem der vorstehenden Ansprüche, dadurch gekennzeichnet, daß von dem Entfernungsmesser (6) ausgehende Ortungsstrahlen (OS) benachbart zum austretenden Gutstrom (13) auf den Ladebehältern (4) auftreffen.

4. Vorrichtung nach einem der Ansprüche 2 oder 3, dadurch gekennzeichnet, daß die von dem Entfernungsmesser (6) ausgehenden Ortungsstrahlen (OS) eine den auf den Ladebehälter (4) auftreffenden Gutstrom (13) teilweise oder vollständig umschließende Abtastfläche (A) beaufschlagen oder daß die von dem Entfernungsmesser (6) ausgehenden Ortungsstrahlen (OS) mehrere um die Fläche des auf dem Ladebehälter (4) auftreffenden Gutstromes (13) herum verteilt angeordnete eng begrenzte Abtastflächen (A1, A2, A3, A4) beaufschlagen oder der Entfernungsmesser (6) je einen Ortungsstrahl (LOS, LOS') zu beiden Seiten parallel zum Gutstrom (13), gesteuert verschwenkbar abgibt und aufnimmt.

5. Vorrichtung nach einem der vorstehenden Ansprüche, dadurch gekennzeichnet, daß der an einer Erntemaschine (1) angeordnete Auswurfkrümmer/Auswurfrohr (3) auf einem Drehkranz (7) in einem Schwenkwinkelbereich von etwa 240° zwischen zwei jeweils quer zur Erntemaschinen-Längsrichtung angeordneten Schwenkwinkel-Endlagen horizontal schwenkbar gelagert ist, und der Drehkranz (7) von einem über die Auswerte- und Steuereinrichtung (10) ansteuerbaren Motor (8) zur Horizontalverschwenkung des Auswurfkrümmers/Auswurfrohres (3) angetrieben wird.

6. Vorrichtung nach Anspruch 5, dadurch gekennzeichnet, daß an dem Auswurfkrümmer/Auswurfrohr (3) ein erster Positionsmelder (11) angeordnet ist, der eine jeweilige Horizontal-Schwenkstellung an die Auswerte- und Steuereinrichtung (10) meldet und daß an der Erntemaschine (1) in den Schwenkwinkel-Endlagen des Auswurfkrümmers/Auswurfrohres (3) je ein Endschalter (S2, S3) vorgesehen ist, deren jeweiliger Schaltzustand (Auf, Zu) der Auswerte- und Steuereinrichtung (10) zugeführt ist.

7. Vorrichtung nach Anspruch 5, dadurch gekennzeichnet, daß der Motor (8) zum Verschwenken des Auswurfkrümmers/Auswurfrohres (3) von einem über zwei Steuerventile (SV1, SV2), eines für eine Drehung nach links und eines für eine Drehung nach rechts, ansteuerbaren Hydraulikmotor gebildet ist, wobei die Steuerventile (SV1, SV2) jeweils von der Auswerte- und Steuereinrichtung (10) elektrisch angesteuert werden.

8. Vorrichtung nach einem der vorstehenden Ansprüche, dadurch gekennzeichnet, daß der Entfernungsmesser (6) an der endseitig am Auswurfkrümmer/Auswurfrohr (3) vertikal schwenkbar gelagerten Auswurfklappe (5) angeordnet ist, und die Auswurfklappe (5) mittels eines am Auswurfkrümmer/Auswurfrohr (3) angelenkten Hydraulikzylinders (9) in einem Schwenkwinkelbereich von etwa 90° verschwenkbar ist, wobei der Hydraulikzylinder (9) von zwei Neigungssteuerventilen (SV3, SV4), eines für die Verschwenkung nach oben und eines für die Verschwenkung nach unten, angesteuert wird, welche ihrerseits von der Auswerte- und Steuereinrichtung (10) elektrisch angesteuert sind.

9. Vorrichtung nach Anspruch 8, dadurch gekennzeichnet, daß an der vertikal schwenkbaren Auswurfklappe (5) ein zweiter Positionsmelder (11A) angeordnet ist, der deren Neigestellung an die Auswerte- und Steuereinheit (10) signalisiert.

10. Vorrichtung nach Anspruch 8, dadurch gekennzeichnet, daß die Auswurfklappe (5) zwischen einer etwa waagerechten und einer etwa vertikal nach unten gerichteten Stellung verschwenkbar ist.

11. Vorrichtung nach einem der vorstehenden Ansprüche, dadurch gekennzeichnet, daß der Entfernungsmesser (6) in einem an der nach unten offenen Auswurfklappe (5) und diese von oben übergreifenden U-förmigen Gehäuse (6A) angeordnet ist, wobei die Sender (6B, 6D) und die Empfänger (6C, 6D) des Entfernungsmessers (6) an der der Auswurfrichtung zugewandten Stirnseite des Gehäuses (6A) angeordnet sind.

12. Vorrichtung nach einem der vorstehenden Ansprüche, dadurch gekennzeichnet, daß die Auswerte- und Steuereinrichtung (10) jeweils in einem leeren Ladebehälter (4) den Abstand zwischen einer vorderen und einer hinteren Ladebehälter-Wand (4A, 4B), den Abstand zwischen den seitlichen Ladebehälterwänden (4C, 4D) und den Abstand von den oberen Rändern (4F) der Ladebehälter-Wände (4A, 4B, 4C, 4D) zum Boden (4E) des Ladebehälters (4) durch Horizontal- und Vertikalverschwenkungen des Entfernungsmessers (6) sowie Koordinatentransformation vermißt und daraus ein Ladevolumen und/oder eine maximale Füllstandshöhe ermittelt und speichert.

13. Vorrichtung nach einem der vorstehenden Ansprüche, dadurch gekennzeichnet, daß die Auswerte- und Steuereinrichtung (10) in einem Ladebetrieb laufend die Entfernungssignale (ES) bezüglich des Erreichens einer vorgegebenen oder vorher bestimmten maximalen Füllstandshöhe in einem jeweiligen Abtastbereich überwacht und dann, wenn diese erreicht ist, eine solche Verschwenkung des Auswurfkrümmers/Auswurfrohres (3) und/oder der Auswurfklappe (5) systematisch fortschreitend steuert, bis die Entfernungssignale (ES) signalisieren, daß der Gutstrom (13) an einer Stelle des Ladebehälters (4) mit einer geringeren Füllstandshöhe (h) auftrifft.

14. Vorrichtung nach Anspruch 13, dadurch gekennzeichnet, daß die Auswerte- und Steuereinrichtung (10) eine akustische oder optische Warnvorrichtung betätigt, wenn die Auswertung der Entfernungssignale (ES) ergibt, daß die Abtastfläche (A) oder mindestens eine der Abtastflächen (A1, A2, A3, A4) des Entfernungsmessers (6) außerhalb des Ladebehälters (4) liegt.

15. Vorrichtung nach einem der Ansprüche 1 bis 12, dadurch gekennzeichnet, daß die Auswerte- und Steuervorrichtung (10) durch eine Verschwenkvorrichtung (SML) des Entfernungsmessers (6) dessen Ortungsstrahl(en) (LOS, LOS') unabhängig von der Schwenkstellung der Auswurfklappe (5) laufend scannend in Flächen, die in Fahrtrichtung nahe vor und hinter dem Gutstrom (13) liegen, verschwenkt und einen Seitenabstand (D) einer Oberkante (OK) einer entferntliegenden Behälterseitenwand (BW) und eine Füllstandshöhe (h) aus den Entfernungssignalen (ES) und einen Scannerschwenkwinkel (WS) und dem Drehkranz-Schwenkwinkelsignal (DW) sowie der Position des Entfernungsmessers (6) an der Erntemaschine (1) durch eine Koordinatentransformation einen Auswurfklappenwinkel (WAK) derart berechnet und ausgebend ansteuert, daß der zentrale Auftreffort des Gutstromes (13) jeweils in der Querschnittsmitte des Ladebehälters (4) bei der jeweiligen Füllstandshöhe (h) liegt, und die Steuervorrichtung (10) jeweils das Erreichen einer maximalen Füllstandshöhe überprüft und ggf. eine fortschreitende Verschwenkung des Drehkanzes (7) ansteuert.

16. Vorrichtung nach einem der Ansprüche 1 bis 12, dadurch gekennzeichnet, daß die Auswerte- und Steuervorrichtung (10) durch eine Verschwenkvorrichtung (SML) des Entfernungsmessers (6) dessen Ortungsstrahl(en) (LOS, LOS') unabhängig von der Schwenkstellung der Auswurfklappe (5) scannend in Flächen, die in der Fahrtrichtung nahe vor und hinter dem Gutstrom (13) verlaufen, verschwenkt und laufend eine Oberkante (OK) einer entferntliegenden Behälterseitenwand (BW) aus den Entfernungssignalen (ES) ertastet und den dazugehörigen Oberkanten-Scannerwinkel (WSO', WSO'') gegen die Senkrechte ermittelt und daraus einen Klappenrückzugswinkel (KWS', KWS'') gegenläufiger Größe bestimmt, um den sie die Auswurfklappe (5) gegenüber dem Ortungsstrahl (LOS, LOS') nach unten gerichtet steuernd einstellt, so daß bei einem relativ großen gemessenen Scannerschwenkwinkel (WSO') der Gutstrahl (13') etwa auf den unteren Bereich der entfernten Behälterseitenwand (BW) gerichtet ist und bei einem relativ kleinen gemessenen Scannerschwenkwinkel (WSO'') der Gutstrahl (13'') etwa auf die Querschnittsmitte des Behälterbodens gerichtet ist, und mit dem periodisch verschwenkten Ortungsstrahl (LOS, LOS') die Füllstandshöhe (h) jeweils auf das Erreichen einer maximalen Füllstandshöhe überprüft und ggf. eine fortschreitende Verschwenkung des Drehkranzes (7) ansteuert.

17. Vorrichtung nach einem der vorstehenden Ansprüche, dadurch gekennzeichnet, daß die Auswerte- und Steuereinrichtung (10) eine akustische und/oder optische Anzeige (15) betätigt, wenn der Ladebehälter (4) bereits so weit mit dem Füllgut (14) beladen ist, daß an keiner Stelle des Ladebehälters (4) die lokale Füllstandshöhe (h) unter der maximalen Füllstandshöhe liegt.

## Claims

1. Apparatus for automatically filling a mobile load container (4) with a material flow (13), having a discharge bend/discharge pipe (3, 5) which is pivotable under the control of an evaluation and control device (10) about a vertical and horizontal axis or about a vertical axis, possibly with a pivotable discharge flap (5) at its end, wherein the discharge bend or the discharge pipe (3, 5) is provided with at least one vertically and/or horizontally pivotable range measuring device (6) which detects the filling level (h) of the material in the mobile load container (4) relative to the maximum possible filling level in the mobile load container (4), and the pivotable range measuring device (6) is arranged in the discharge-side end region of the discharge bend/discharge pipe (3, 5), characterised in that the range measuring device (6) comprises an optical and/or acoustic range measuring device (6) which produces range signals (ES), the range signals (ES) produced by said range measuring device (6) are fed to an electronic evaluation and control device (10) which ascertains from the range signals (ES) by means of a control program the respective filling level (h) and the position of the edges of the side walls of the load container (4) and continuously evaluates the range signals (ES) to form electrical control signals which are transmitted to control valves (SV1-SV6) for actuation thereof, and wherein the control program so determines the control signals, with evaluation of the supplied range signals (ES), that the discharge direction of the material flow (13) is within the position of the edges of the load container (4).

2. Apparatus according to claim 1 characterised in that the range measuring device (6) is formed by a laser interferometer measuring apparatus with one or more transmitters (6B) in the form of transmitting lasers and receivers (6C) in the form of photoreceivers, wherein the locating beams (OS, LOS, LOS') from the transmitting laser are at least partially reflected to the photoreceivers by the load container (4), the filling material (14) and/or the ground in the field, or that the range measuring device (6) is formed by an ultrasonic measuring apparatus with one or more ultrasonic transmitters and receivers (60) such as piezoelectric elements, wherein the locating beams (OS) from the ultrasonic transmitters are at least partially reflected to the receivers by the load container (4), the filling material (14) and/or the ground in the field.

3. Apparatus according to one of the preceding claims characterised in that locating beams (OS) from the range measuring device (6) impinge on the load containers (4) in adjacent relationship with the issuing material flow (13).

4. Apparatus according to one of claims 2 and 3 characterised in that the locating beams (OS) from the range measuring device (6) act on a sensing surface (A) partially or completely surrounding the material flow (13) which impinges on to the load container (4) or that the locating beams (OS) from the range measuring device (6) act on a plurality of sensing surfaces (A1, A2, A3, A4) which are closely defined and which are arranged in a distributed array around the surface of the material flow (13) impinging on the load container (4) or the range measuring device (6) controlledly pivotably outputs and receives a respective locating beam (LOS, LOS') at both sides in parallel relationship with the material flow (13).

5. Apparatus according to one of the preceding claims characterised in that the discharge bend/discharge pipe (3) arranged on a harvester (1) is mounted on a turntable ring (7) horizontally pivotably through a pivot angle range of about 240° between two pivot angle end positions each arranged transversely with respect to the longitudinal direction of the harvester, and the turntable ring (7) is driven by a motor (8) actuable by way of the evaluation and control device (10) for horizontal pivotal movement of the discharge bend/discharge pipe (3).

6. Apparatus according to claim 5 characterised in that arranged on the discharge bend/discharge pipe (3) is a first position signalling device (11) which signals a respective horizontal pivotal position to the evaluation and control device (10) and that provided on the harvester (1) in the pivot angle end positions of the discharge bend/discharge pipe (3) is a respective limit switch (S2, S3) whose respective switching state (on, off) is passed to the evaluation and control device (10).

7. Apparatus according to claim 5 characterised in that the motor (8) for pivotal movement of the discharge bend/discharge pipe (3) is formed by a hydraulic motor actuable by way of two control valves (SV1, SV2), one for rotary movement towards the left and one for rotary movement towards the right, wherein the control valves (SV1, SV2) are each electrically actuated by the evaluation and control device (10).

8. Apparatus according to one of the preceding claims characterised in that the range measuring device (6) is arranged at the discharge flap (5) which is vertically pivotably mounted at the end on the discharge bend/discharge pipe (3) and the discharge flap (5) is pivotable through a pivot angle range of about 90° by means of a hydraulic cylinder (9) pivotably mounted to the discharge bend/discharge pipe (3), wherein the hydraulic cylinder (9) is actuated by two inclination control valves (SV3, SV4), one for pivotal movement upwardly and one for pivotal movement downwardly, which in turn are electrically actuated by the evaluation and control device (10).

9. Apparatus according to claim 8 characterised in that arranged on the vertically pivotable discharge flap (5) is a second position signalling device (11A) which signals the inclination position thereof to the evaluation and control unit (10).

10. Apparatus according to claim 8 characterised in that the discharge flap (5) is pivotable between a substantially horizontal position and a substantially vertically downwardly directed position.

11. Apparatus according to one of the preceding claims characterised in that the range measuring device (6) is arranged in a U-shaped housing (6A) which on the downwardly open discharge flap (5) engages over same from above, wherein the transmitters (6B, 6D) and the receivers (6C, 6D) of the range measuring device (6) are arranged at the end of the housing (6A), which is towards the discharge direction.

12. Apparatus according to one of the preceding claims characterised in that the evaluation and control device (10), in a respective empty load container (4), measures the spacing between a front and a rear load container wall (4A, 4B), the spacing between the lateral load container walls (4C, 4D) and the spacing from the upper edges (4F) of the load container walls (4A, 4B, 4C, 4D) to the bottom (4E) of the load container (4) by horizontal and vertical pivotal movements of the range measuring device (6) and co-ordinate transformation and ascertains therefrom a load volume and/or a maximum filling level and stores same.

13. Apparatus according to one of the preceding claims characterised in that the evaluation and control device (10) in a loading operation continuously monitors the range signals (ES) in regard to reaching a predetermined or previously defined maximum filling level in a respective sensing region and, when same is reached, systematically progressively controls such a pivotal movement of the discharge bend/discharge pipe (3) and/or the discharge flap (5) until the range signals (ES) signal that the material flow (13) is impinging at a location in the load container (4) with a lower filling level (h).

14. Apparatus according to claim 13 characterised in that the evaluation and control device (10) actuates an acoustic or optical warning device when evaluation of the range signals (ES) shows that the sensing surface (A) or at least one of the sensing surfaces (A1, A2, A3, A4) of the range measuring device (6) is outside the load container (4).

15. Apparatus according to one of claims 1 to 12 characterised in that the evaluation and control device (10) pivots by virtue of a pivoting device (SML) of the range measuring device (6) the locating beam or beams (LOS, LOS') independently of the pivotal position of the discharge flap (5) continuously in scanning mode in surfaces which in the direction of travel are closely in front of and behind the material flow (13) and calculates a lateral spacing (D) of an upper edge (OK) of a remote container side wall (BW) and a filling level (h) from the range signals (ES) and a scanner pivot angle (WS) and the turntable ring pivot angle signal (DW) and the position of the range measuring device (6) on the harvester (1) by co-ordinate transformation a discharge flap angle (WAK) and in output mode actuates same, in such a way that the central location of impingement of the material flow (13) is respectively at the cross-sectional centre of the load container (4) at the respective filling level (h), and the control device (10) respectively monitors the attainment of a maximum filling level and possibly actuates progressive pivotal movement of the turntable ring (7).

16. Apparatus according to one of claims 1 to 12 characterised in that the evaluation and control device (10) by a pivoting device (SML) of the range measuring device (6) pivots the locating beam or beams (LOS, LOS') thereof independently of the pivotal position of the discharge flap (5) in scanning mode in surfaces which in the direction of travel extend closely in front of and behind the material flow (13) and continuously senses an upper edge (OK) of a remote container side wall (BW) from the range signals (ES) and ascertains the associated upper edge scanner angle (WSO', WSO'') relative to the perpendicular and ascertains therefrom a flap withdrawal angle (KWS', KWS'') of oppositely oriented magnitude, through which it downwardly directedly controllingly sets the discharge flap (5) with respect to the locating beam (LOS, LOS') so that, at a relatively large measured scanner pivot angle (WSO') the material jet (13') is directed substantially on to the lower region of the remote container side wall (BW) and with a relatively small measured scanner pivot angle (WSO'') the material jet (13'') is directed substantially on to the cross-sectional centre of the container bottom and respectively checks the filling level (h) with the periodically pivoted locating beam (LOS, LOS') for the attainment of a maximum filling level and possibly actuates progressive pivotal movement of the turntable ring (7).

17. Apparatus according to one of the preceding claims characterised in that the evaluation and control device (10) actuates an acoustic and/or optical display (15) when the load container (4) is already so loaded with the filling material (14) that the local filling level (h) is not below the maximum filling level at any location in the load container (4).

## Revendications

1. Dispositif pour le chargement automatique d'un conteneur mobile (4) avec un flux de produit, comprenant un coude éjecteur/tube éjecteur (3, 5) pivotant autour d'un axe vertical et d'un axe horizontal ou autour d'un axe vertical et commandé par un dispositif de traitement et de commande (10), le cas échéant avec un volet d'éjecteur (5) pivotant disposé à l'extrémité du coude éjecteur, le coude éjecteur ou le tube éjecteur (3, 5) étant équipé d'au moins un télémètre (6) orientable verticalement et/ou horizontalement qui mesure le niveau de remplissage (h) dans le conteneur mobile (4) par rapport au niveau de remplissage maximal admissible dudit conteneur mobile (4) et le télémètre (6) orientable étant disposé dans la région de l'extrémité d'éjection du code éjecteur/tube éjecteur (3, 5), caractérisé par le fait que le télémètre (6) se compose d'un télémètre optique et/ou acoustique (6) qui produit des signaux de distance (ES), que les signaux de distance (ES) produits par le télémètre (6) sont transmis à un dispositif électronique de traitement et de commande (10) qui, sur la base des signaux de distance (ES) détermine à l'aide d'un programme de commande le niveau de remplissage (h) correspondant et la position des bords des parois latérales du conteneur (4) et exploite en continu les signaux de distance (ES) pour former des signaux de réglage électriques qui sont transmis à des valves de commande (SV1-SV6) à des fins d'actionnement de celles-ci, le programme de commande déterminant les signaux de réglage en exploitant les signaux de distance (ES) transmis de telle sorte que la direction d'éjection du flux de produit (13) soit située à l'intérieur des limites définies par les bords du conteneur (4).

2. Dispositif selon la revendication 1, caractérisé par le fait que le télémètre (6) est formé d'un dispositif de mesure à interféromètre à laser, avec un ou plusieurs émetteurs (6B) sous la forme de lasers d'émission et un ou plusieurs récepteurs (6C) sous la forme de récepteurs photo-électriques, les rayons de détection (OS, LOS, LOS') émis par le laser étant au moins partiellement réfléchis en direction des récepteurs photo-électriques par le conteneur (4), le produit (14) et/ou le sol du champ, ou par le fait que le télémètre (6) est formé d'un ou plusieurs dispositifs de mesure à ultrasons, avec un ou plusieurs émetteurs et récepteurs à ultrasons (6D), tels que des éléments piézo, les rayonnements de détection (OS) émis par les émetteurs d'ultrasons étant au moins partiellement réfléchis en direction des récepteurs par le conteneur (4), le produit (14) et/ou le sol du champ.

3. Dispositif selon une des revendications précédentes, caractérisé par le fait que des rayons de détection (OS) provenant du télémètre (6) frappent le conteneur (4) dans le voisinage du flux de produit (13) sortant du coude éjecteur.

4. Dispositif selon une des revendications 2 ou 3, caractérisé par le fait que les rayons de détection (OS) émis par le télémètre (6) frappent une surface de palpage (A) qui englobe partiellement ou totalement le flux de produit (13) arrivant dans le conteneur (4) ou par le fait que les rayons de détection (OS) émis par le télémètre (6) frappent plusieurs surfaces de palpage (A1, A2, A3, A4) limitées disposées autour de la surface du flux de produit (13) arrivant dans le conteneur (4) ou par le fait que le télémètre (6) émet et reçoit avec un pivotement contrôlé un rayon de détection (LOS, LOS') de chaque côté parallèlement au flux de produit (13).

5. Dispositif selon une des revendications précédentes, caractérisé par le fait que le coude éjecteur/tube éjecteur (3) disposé sur une machine de récolte (1) est monté sur une couronne de pivotement (7)avec possibilité de pivotement dans la direction horizontale à l'intérieur d'une plage d'environ 240°, entre deux positions de pivotement extrêmes situées chacune transversalement à la direction longitudinale de la machine de récolte, et que la couronne de pivotement (7) est entraînée par un moteur (8) commandé par l'intermédiaire du dispositif de traitement et de commande (10) aux fins de faire pivoter le coude éjecteur/tube éjecteur (3) dans le plan horizontal.

6. Dispositif selon la revendication 5, caractérisé par le fait qu'un premier détecteur de position (11) est disposé sur le coude éjecteur/tube éjecteur (3), lequel détecteur transmet une position de pivotement horizontal au dispositif de traitement et de commande (10) et par le fait qu'il est prévu sur la machine de récolte dans les positions de pivotement extrêmes chaque fois un capteur de fin de course (S2, S3) dont l'état de commutation (ouvert, fermé) est transmis au dispositif de traitement et de commande (10).

7. Dispositif selon la revendication 5, caractérisé par le fait que le moteur (8) qui assure le pivotement du coude éjecteur /tube éjecteur (3) est un moteur hydraulique commandé par l'intermédiaire de deux valves de commande (SV1, SV2), l'une pour la rotation vers la gauche, l'autre pour la rotation vers la droite, les valves de commande (SV1, SV2) étant commandées chacune électriquement par le dispositif de traitement et de commande (10).

8. Dispositif selon une des revendications précédentes, caractérisé par le fait que le télémètre (6) est disposé sur le volet d'éjecteur (5) monté pivotant verticalement à l'extrémité du coude éjecteur/tube éjecteur (3) et que le volet d'éjecteur (5) peut pivoter à l'intérieur d'une plage angulaire d'environ 90° sous l'action d'un vérin hydraulique (9) articulé sur le coude éjecteur/tube éjecteur (3), le vérin hydraulique (9) étant commandé par des valves de commande d'inclinaison (SV3, SV4), l'une pour le pivotement vers le haut et l'autre pour le pivotement vers le bas, qui sont à leur tour commandées électriquement par le dispositif de traitement et de commande (10).

9. Dispositif selon la revendication 8, caractérisé par le fait qu'un second détecteur de position (11A) est disposé sur le volet d'éjecteur (5) pivotant verticalement, détecteur qui transmet la position en inclinaison du volet à l'unité de traitement et de commande (10).

10. Dispositif selon la revendication 8, caractérisé par le fait que le volet d'éjecteur (5) peut pivoter entre une position sensiblement horizontale et une position sensiblement verticale dirigé vers le bas.

11. Dispositif selon une des revendications précédentes, caractérisé par le fait que le télémètre (6) est disposé dans un boîtier (6A) en forme de U, monté sur le volet d'éjecteur (5) ouvert vers le bas et chevauche celui-ci par le dessus, les émetteurs (6B, 6D) et les récepteurs (6C, 6D) du télémètre (6) étant disposés sur la face frontale du boîtier (6A) orientée dans la direction d'éjection.

12. Dispositif selon une des revendications précédentes, caractérisé par le fait que le dispositif de traitement et de commande (10), dans un conteneur (4) vide, mesure la distance entre une paroi avant et une paroi arrière de conteneur (4A, 4B), la distance entre les parois latérales de conteneur (4C, 4D) et la distance entre les bords supérieurs (4F) des parois de conteneur (4A, 4B, 4C, 4D) et le fond (4E) du conteneur (4) par des pivotements verticaux du télémètre (6) ainsi que par transformation de coordonnées et détermine et mémorise à partir de ces distances un volume de chargement et/ou un niveau maximal de remplissage.

13. Dispositif selon une des revendications précédentes, caractérisé par le fait que le dispositif de traitement et de commande (10) en mode de chargement, surveille en continu les signaux de distance (ES) afin de détecter l'instant où un niveau de remplissage maximal donné ou prédéterminé est atteint dans une zone de palpage donnée et lorsque ce niveau de remplissage est atteint, commande un pivotement progressif du coude éjecteur/tube éjecteur (3) et/ou du volet d'éjecteur (5) jusqu'à ce que les signaux de distance (ES) indiquent que le flux de produit (13) tombe en un point du conteneur (4) où le niveau de remplissage (h) est plus bas.

14. Dispositif selon la revendication 13, caractérisé par le fait que le dispositif de traitement et de commande (10) actionne un dispositif d'alerte acoustique ou optique lorsque le traitement des signaux de distance (ES) indique que la surface de palpage (A) ou au moins une des surfaces de palpage (A1, A2, A3, A4) du télémètre (6) se trouve à l'extérieur du conteneur (4).

15. Dispositif selon une des revendications 1 à 12, caractérisé par le fait que le dispositif de traitement et de commande (10), grâce à un dispositif de pivotement (SML) du télémètre (6), dirige en palpant en permanence, indépendamment de la position angulaire du volet d'éjecteur (5), le (les) rayon(s) de détection (LOS, LOS') sur des surfaces proches du flux de produit (13), devant ou derrière celui-ci dans la direction de progression, et calcule et règle une distance latérale (D) d'un bord supérieur (OK) d'une paroi latérale de récipient (BW) éloignée et un niveau de remplissage (h) à partir des signaux de distance (ES), un angle de pivotement de palpeur (WS) à partir du signal de pivotement de couronne (DW) et à partir de la position du télémètre (6) sur la machine agricole (1), par une transformation de coordonnées, un angle de volet d'éjecteur (WAK) tels que le point d'impact central du flux de produit (13) soit situé chaque fois au centre de la section du récipient (4), au niveau de remplissage (h) considéré, et par le fait que le dispositif de commande (10) surveille chaque fois l'instant où un niveau de remplissage maximal est atteint et le cas échéant commande un pivotement progressif de la couronne (7).

16. Dispositif selon une des revendications 1 à 12, caractérisé par le fait que le dispositif de traitement et de commande (10), grâce à un dispositif de pivotement (SML) du télémètre (6), dirige en palpant, indépendamment de la position angulaire du volet d'éjecteur (5), le (les) rayon(s) de détection (LOS, LOS') sur des surfaces proches du flux de produit (13), devant ou derrière celui-ci dans la direction de progression, et palpe en continu un bord supérieur (OK) d'une paroi latérale de conteneur (BW) éloignée pour former des signaux de distance (ES) et calcule l'angle de palpeur de bord correspondants (WSO', WSO'') par rapport à la verticale et détermine une valeur d'angle de fermeture de volet (KWS', KWS''), de laquelle le dispositif de traitement et de commande règle le volet d'éjecteur (5) vers le bas par rapport au rayon de détection (LOS, LOS') de telle sorte que pour un angle de pivotement de palpeur (WSO') mesuré relativement grand le flux de produit (13') soit dirigé sensiblement sur la région inférieure de la paroi de conteneur (BW) éloignée et pour un angle de pivotement de palpeur (WSO'') relativement faible le flux de produit (13'')soit dirigé sensiblement au centre de la surface de fond du conteneur, et avec le rayon de détection (LOS, LOS') surveille l'instant où le niveau de remplissage (h) atteint le niveau de remplissage maximal et le cas échéant commande un pivotement progressif de la couronne de pivotement (7).

17. Dispositif selon une des revendications précédentes, caractérisé par le fait que le dispositif de traitement et de commande (10) déclenche une indication acoustique et/ou optique (15) lorsque le chargement en produit récolté (14) du récipient (4) est tel qu'en aucun point du récipient (4) le hauteur de remplissage locale (h) n'est inférieur au niveau de remplissage maximal.
